# DEMANDE DE BREVET EUROPEEN

(11) **EP 0 724 327 A1**
(43) Date de publication de la demande: **31.07.1996**
(21) Numéro de dépôt: 96400156.4
(22) Date de dépôt: 23.01.1996
(51) Int. Cl.: H02M 1/00

(54) **Alimentation continue à correcteur de facteur de puissance**

(30) Priorité: 27.01.1995 FR 9500965
(71) Demandeur: THOMCAST, 78700 Conflans-Sainte-Honorine (FR)
(72) Inventeur: Cadinot, Didier, F-92402 Courbevoie Cedex (FR); Petit, Daniel, F-92402 Courbevoie Cedex (FR)
(74) Mandataire: Courtellemont, Alain

(57) **Abrégé**

L'invention concerne le domaine des alimentations continues dont l'énergie est fournie par un secteur triphasé.

Il est proposé une alimentation où, à chacune des trois phases du secteur, correspond un montage redresseur (A1; A2; A3) suivi d'une cellule de correction de facteur de puissance (B1, D1, E1, F1; B2, D2, E2, F2; B3, D3, E3, F3) à convertisseur à découpage (B1; B2; B3); les sorties des trois cellules sont branchées en parallèle. L'un des convertisseurs (B3) est commandé pour fournir une tension de sortie constante tandis que les deux autres, du fait d'un montage maître-esclave (C'1, C'2, C'3, C1, C2, C3, T1, T2, R, R11, R12, R21, R22), sont commandés pour fournir une puissance identique à celle délivrée par le convertisseur commandé pour fournir une tension de sortie constante. Chaque convertisseur comporte une protection contre les courts-circuits et un isolement galvanique entre son entrée et sa sortie.

Application aux alimentations continues.

## Description

La présente invention se rapporte à une alimentation continue à correcteur de facteur de puissance pour secteur triphasé, comportant trois montages redresseurs disposés en triangle, le correcteur comportant une première, une deuxième et une troisième cellule de correction de facteur de puissance à convertisseur à découpage asservi pour imposer une valeur donnée au rapport de sa tension instantanée d'entrée sur son courant instantané d'entrée, ces cellules étant respectivement couplées aux trois montages redresseurs et ayant respectivement trois paires de conducteurs de sortie reliées en parallèle à une même paire de bornes de sortie, la première cellule comportant des moyens d'asservissement de sa valeur donnée en fonction de la tension aux bornes de sortie et la deuxième et la troisième cellule comportant des moyens d'asservissement de leur valeur donnée à la différence entre leur puissance délivrée et la puissance délivrée par la première cellule.

Une telle alimentation est par exemple décrite dans le brevet US-A-5 157 269. Mais l'alimentation qui est proposée dans ce brevet présente des inconvénients qui peuvent rendre son utilisation impossible dans certains cas. En particulier elle ne permet pas de fournir une tension de polarité quelconque par rapport à la masse et elle ne comporte pas une protection contre les courts-circuits en sortie.

La présente invention a pour but d'éviter ces inconvénients.

Ceci est obtenu, en paticulier, en utilisant dans l'alimentation des convertisseurs à découpage à isolement galvanique, comportant une protection contre les courts-circuits de sortie.

La présente invention a pour objet une alimentation protégée contre les courts-circuits et capable de fournir une tension de polarité quelconque, telle que définie par la revendication 1.

La présente invention sera mieux comprise et d'autres caractéristiques apparaîtront à l'aide de la description ci-après et des figures s'y rapportant qui représentent:
- la figure 1, un schéma d'ensemble d'un exemple de réalisation d'une alimentation selon l'invention,
- les figures 2 et 3, des schémas plus détaillés de parties de la figure 1.

Sur les différentes figures les mêmes éléments sont désignés par les mêmes références.

Dans ce qui suit il va être proposé une alimentation continue réalisée à partir d'un secteur triphasé où les trois phases sont utilisées pour élaborer trois signaux de sortie directement reliés en parallèle aux bornes de sortie de l'alimentation et où, afin d'obtenir un facteur de puissance très voisin de 1, des moyens sont mis en oeuvre afin que les énergies fournies par les trois signaux de sortie soient identiques; ces trois signaux de sortie étant branchés en parallèle, l'égalité des énergies pourra être recherchée en faisant que les valeurs moyennes des courants relatifs aux trois signaux de sortie soient identiques.

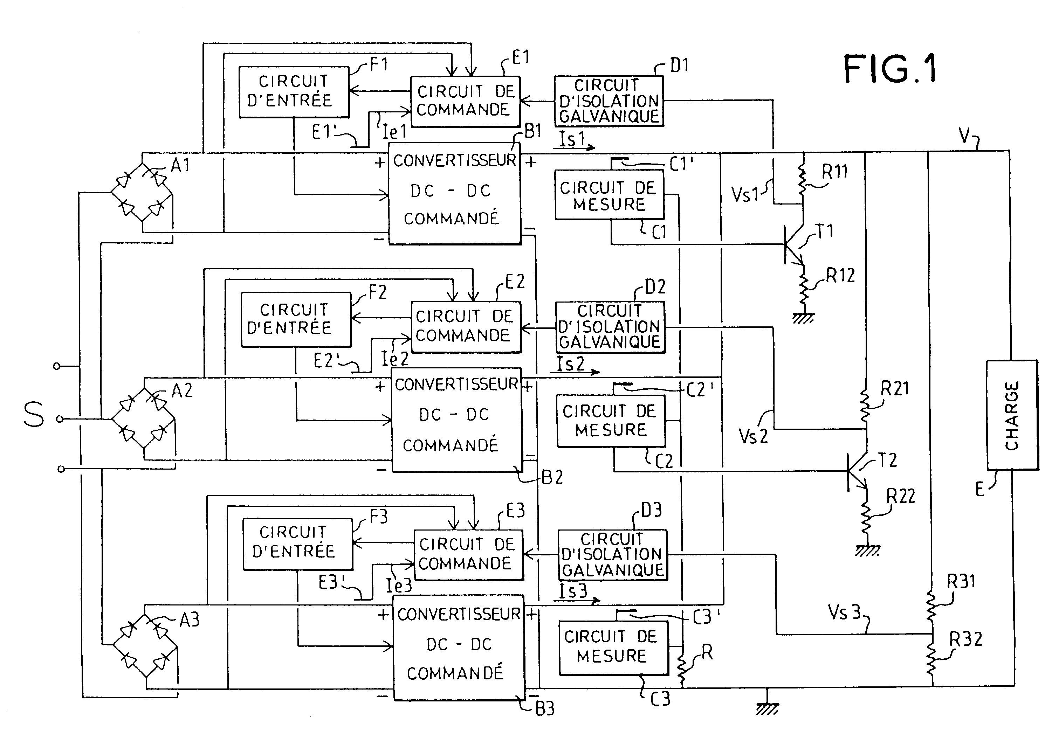

La figure 1 représente une alimentation continue qui, à partir d'un secteur triphasé S, fournit une tension continue V à une charge E dont une des deux bornes est à la masse.

Cette alimentation comporte trois montages redresseurs A1, A2, A3 disposés en triangle sur les trois phases du secteur S. Chaque montage redresseur est constitué de quatre diodes montées en pont pour effectuer un redressement bi-alternance.

Les trois montages redresseurs A1, A2, A3 ont leurs sorties continues respectivement reliées aux entrées de puissance, notées "+" et "-", de trois convertisseurs continu-continu B1, B2, B3. Ces convertisseurs sont des convertisseurs à découpage, commandés sur une entrée de commande pour imposer une valeur donnée au rapport de leur tension instantanée d'entrée sur leur courant instantané d'entrée; cette valeur donnée est fonction, d'habitude de leur tension de sortie mais il apparaîtra dans ce qui suit que cette valeur donnée est déterminée un peu différemment pour les convertisseurs B1, B2 puisqu'elle tend à maintenir la puissance délivrée par chacun de ces convertisseurs égale à celle délivrée par le convertisseur 83. Les convertisseurs B1, B2, B3 ont leurs deux bornes de sortie, notées "+" et "-", reliées respectivement aux deux bornes de la charge E.

Les commandes des convertisseurs B1, B2, B3 sont assurées respectivement par trois circuits intégrés UC3854 fabriqués par la société UNITRODE.

Le circuit de commande E1 possède sa propre tension de référence interne et reçoit la tension de sortie du montage redresseur A1, un signal le1 fourni par un capteur E1' et qui est représentatif du courant instantané consommé par le convertisseur B1, un signal Vs1 délivré à travers un circuit d'isolation galvanique D1. Le circuit de commande E1, délivre, à travers un circuit d'entrée F1, un signal de commande du convertisseur B1. A l'un des deux conducteurs de sortie du convertisseur B1, est couplé un capteur C1' relié à un circuit de mesure C1.

Ce qui vient d'être décrit dans le paragraphe précédent peut être repris en remplaçant les chiffres 1 par des chiffres 2 ou les chiffres 1 par des chiffres 3 partout où ils apparaissent. Ceci revient à dire que, sur chaque phase du secteur est branché une alimentation continue monophasée avec, en plus, un circuit de mesure du courant débité par cette alimentation.

Les circuits de mesure C1, C2, C3 ont tous une sortie reliée à une première borne d'une résistance R dont la seconde borne est à la masse. De plus les circuits de mesure C1 et C2 ont une autre sortie. Cette autre sortie est reliée, pour le circuit C1, à la base d'un transistor NPN, T1, dont l'émetteur est relié à la masse par une résistance R12 et dont le collecteur, qui fournit un signal Vs1, est relié, par une résistance R11, à celle des bornes de sortie de l'alimentation qui n'est pas à la masse. Ce qui vient d'être écrit dans la phrase précédente pour l'autre sortie du circuit C1 peut être écrit également pour l'autre sortie du circuit C2 en remplaçant respectivement T1, R12, Vs1 et R11 par T2, R22, Vs2 et R21.

L'alimentation selon la figure 1 comporte également, entre ses bornes de sorties, deux résistances R31, R32 montées en série, avec la résistance R32 reliée à la masse; un signal Vs3 est obtenu au point commun entre les résistances R31 et R32.

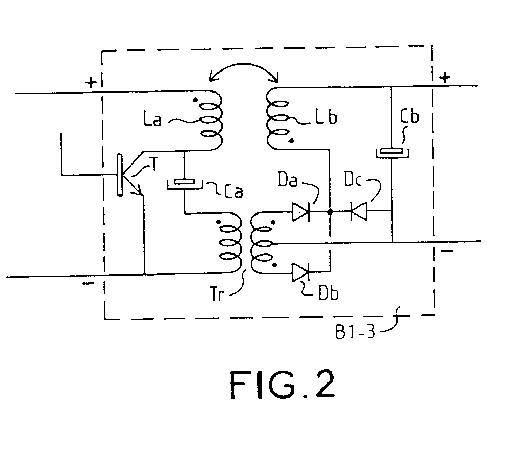

L'alimentation triphasée selon la figure 1, du fait qu'elle résulte de la mise en parallèle des tensions de sortie de trois alimentations monophasées, doit obligatoirement comporter une isolation galvanique entre ses sorties et ses entrées ; cette isolation est assurée par les convertisseurs B1, B2, B3, dont le schéma est donné sur la figure 2, et par les circuits D1, D2, D3 qui comportent un convertisseur tension-fréquence suivi d'un couplage optique lui-même suivi d'un convertisseur fréquence-tension; les convertisseurs tension-fréquence et fréquence-tension ont des fonctions réciproques et, du fait que l'information utile est contenue non pas dans l'amplitude mais dans la fréquence du signal de sortie du convertisseur tension-fréquence, cette isolation n'est pas tributaire de la variation du gain dans le couplage optique.

La figure 2 est un schéma de réalisation des convertisseurs B1, B2, B3 de la figure 1.

Le convertisseur selon la figure 2 comporte, entre ses bornes d'entrée "+" et "-", une inductance La, la liaison collecteur-émetteur d'un transistor NPN de puissance, T, et, en parallèle sur cette liaison, un condensateur Ca suivi de l'enroulement primaire d'un transformateur Tr. L'entrée de commande du convertisseur est reliée à la base du transistor T. Le transformateur Tr présente un enroulement secondaire à point milieu associé à un montage redresseur à deux diodes Da, Db dont les cathodes sont reliées à l'une des extrémités d'une inductance Lb dont l'autre extrémité est reliée à la sortie "+" du convertisseur. Un condensateur de filtrage, Cb, interne au convertisseur, est connectée entre les bornes de sortie "+" et "-". Une diode Dc a son anode reliée à la sortie "-" du convertisseur et sa cathode reliée aux cathodes des diodes Da, Db ; il s'agit d'une diode dite de roue libre, free wheel diode dans la littérature anglo-saxonne, qui, s'il est demandé un fonctionnement du convertisseur en conduction discontinue, évite que soit appliquée sur le condensateur Ca une tension inverse destructrice. Les inductances La et Lb présentent un faible coefficient de mutuelle induction de manière à produire un lissage du courant de sortie du convertisseur.

Le condensateur Ca se charge quand le transistor T est bloqué et se décharge quand il est conducteur. Ainsi le transformateur Tr fournit sur son secondaire une tension alternative qui est redressée par les diodes Da, Db. Quant à la commande du temps de conduction du transistor T elle détermine la valeur du courant d'entrée et donc du courant de sortie du convertisseur. Le condensateur Ca constitue une protection contre les courts-circuits de sortie car, si le transistor T reste bloqué, du fait de la présence du condensateur Ca aucune énergie n'est transmise au transformateur Tr.

Il est à noter que le transistor de puissance T, dans les cas de réalisations en forte puissance du circuit selon la figure 2, peut être en technologie MOSFET ou IGBT. La grille de ce transistor peut alors présenter une capacité trop élevée pour le circuit de commande de type UC3854, c'est pourquoi sur la figure 1 les circuits d'entrée F1, F2, F3 sont interposés entre les convertisseurs et leurs circuits de commande ; ces circuits d'entrée sont, dans le présent exemple de réalisation, des circuits tels que écrits dans le brevet européen 0 230 810 déposé sous priorité française du 13 décembre 1985.

Il a été dit dans ce qui précède que l'alimentation était conçue pour que les énergies fournies par les trois signaux de sortie soient identiques; ces trois signaux de sortie sont ceux délivrés par les convertisseurs B1, B2, B3 et les énergies qu'ils délivrent seront identiques entre elles si leurs courants de sortie, notés Is1, Is2, Is3 sur la figure 1, sont identiques. Cette identité des courants est obtenue, comme il ressort de la figure 1, par un montage de type maître-esclave destiné à élaborer les signaux Vs1, Vs2, Vs3 délivré aux circuits de commande tels que E1 via les circuits d'isolation galvanique tels que D1 et cela en fonction des valeurs moyennes des courants tels que Is1.

Dans ce montage maître-esclave le convertisseur 83 est le maître car le signal Vs3 correspond à sa tension instantanée de sortie, au rapport de réduction près du pont de résistances R31-R32. Les convertisseurs 81, 82 sont les esclaves étant donné que les signaux Vs1 et Vs2 rendent compte non pas simplement de la tension de sortie des convertisseurs mais aussi respectivement des écarts des valeurs moyennes de Is1, Is2 par rapport à la valeur moyenne de ls3.

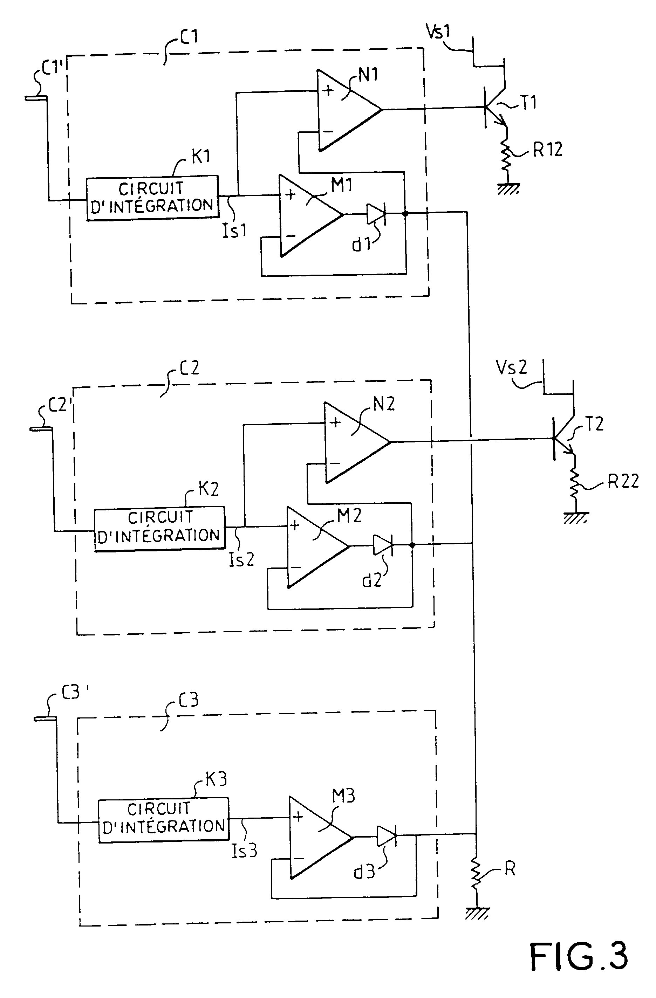

La figure 3 est un schéma d'une partie de l'alimentation selon la figure 1. Ce schéma est destiné à montrer comment sont élaborés les signaux Vs1 et Vs2; il ne comporte que les capteurs C1', C2', C3', les circuits de mesure C1, C2, C3, les transistors T1, T2 et les résistances R, R12, R22, mais les circuits de mesure sont représentés avec des détails de leurs éléments constitutifs.

Le circuit de mesure C1 comporte un circuit d'intégration K1 qui reçoit le signal fourni par le capteur C1' et donne un signal de sortie représentatif de la valeur moyenne du courant Is1 délivré par le convertisseur B1 ; pour simplifier sa désignation et faciliter la remémoration de sa signification, ce signal de sortie est désigné par la même référence, Is1, que le courant auquel il correspond.

Le signal Is1 est appliqué sur les entrées "+" de deux comparateurs M1 et N1 La sortie du comparateur M1 est reliée à l'anode d'une diode d1 dont la cathode est reliée aux entrées "-" des comparateurs M1 et N1 et à la première borne de la résistance R. La sortie du comparateur N1 est reliée à la base du transistor T1.

Le schéma du circuit de mesure C2 est le même que celui du circuit de mesure C1 à cela près que, dans les références, des 2 remplacent les 1. Quant au schéma du circuit de mesure C3, il correspond à celui du circuit de mesure C1 sans le comparateur N1 et ses connections et avec des références où les 1 sont remplacés par des 3.

L'ensemble représenté, sur la figure 3, par les éléments M1-M3, d1-d3 et R ainsi que leurs connexions, constitue un circuit pour sélectionner celui des signaux de sortie Is1, Is2, Is3 qui a la valeur la plus élevée; ce signal qui a la valeur la plus élevée est appliqué sur l'entrée "-" des comparateurs N1 et N2. Deux hypothèses vont être considérées ci-après pour étudier le fonctionnement en maître-esclave de l'alimentation; ces hypothèses portent sur les valeurs respectives des signaux de sortie Is1, Is2, Is3 c'est-à-dire sur les valeurs moyennes des courants délivrés par les convertisseurs B1, B2, B3 ; de ces études de fonctionnement il sera facile de déduire le fonctionnement de l'alimentation pour d'autres hypothèses sur les valeurs respectives possibles de ces signaux si bien que cette étude n'ira pas au delà des deux hypothèses susmentionnées.

Dans la première hypothèse,
Is3 > Is1 > Is2, les comparateurs N1 et N2 rendent les transistors T1 et T2 fortement conducteurs ce qui, comme il ressort de la figure 1, fait baisser Vs1 et Vs2. Les circuits de commande E1, E2 vont, en réaction, augmenter les courants délivrés par les convertisseurs 81, 82. Par contre le courant délivré par le convertisseur maître 83 va baisser afin de maintenir constant Vs3. Le fonctionnement est bien convergent.

Dans la deuxième hypothèse,
Is1 > Is3 > Is2, le comparateur N2 réagit comme au paragraphe précédent, entraînant une augmentation du courant Is2 délivré par le convertisseur B2 tandis que le comparateur N1 va bloquer le transistor T1 et diminuer le courant Is1 délivré par le convertisseur B1. Comme précédemment Vs3 est maintenu constant par le convertisseur maître B3 commandé par le circuit de commande E3.

Il est à noter que, dans ce fonctionnement maître-esclave, il est nécessaire que la résistance R31 et a fortiori la résistance R32 ne soient pas nulles afin de donner à Vs3 une valeur autour de laquelle peuvent varier Vs1 et Vs2.

La présente invention n'est pas limitée à l'exemple décrit c'est ainsi, en particulier, que les convertisseurs commandés selon la figure 2 peuvent être remplacés par des convertisseurs commandés ne possédant pas leur propre isolement galvanique ; il faudra alors prévoir un circuit d'isolation galvanique d'entrée ou de sortie. De même le convertisseur selon la figure 2 peut ne pas comporter son propre condensateur de filtrage; quant à la diode Dc elle n'est indispensable que si le convertisseur est amené à travailler en fonctionnement discontinu.

## Revendications

1. Alimentation continue à correcteur de facteur de puissance pour secteur triphasé, comportant trois montages redresseurs (A1, A2, A3) disposés en triangle, le correcteur comportant une première (B3, D3, E3, F3), une deuxième (B2, D2, E2, F2) et une troisième (B1, D1, E1, F1) cellule de correction de facteur de puissance à convertisseur à découpage (B1, 82, 83) asservi pour imposer une valeur donnée au rapport de sa tension instantanée d'entrée sur son courant instantané d'entrée, ces cellules étant respectivement couplées aux trois montages redresseurs et ayant respectivement trois paires de conducteurs de sortie reliées en parallèle à une même paire de bornes de sortie, la première cellule comportant des moyens d'asservissement (R31, R32) de sa valeur donnée en fonction de la tension aux bornes de sortie et la deuxième et la troisième cellule comportant des moyens d'asservissement (C1'-C3', C1-C3, T1, T2, R, R11, R12, R21, R22) de leur valeur donnée à la différence entre leur puissance délivrée et la puissance délivrée par la première cellule, caractérisée en ce que le convertisseur à découpage de chaque cellule de correction comporte d'une part deux bornes d'entrée (+, -) prévues pour être couplées aux sorties du montage redresseur (A1, A2, A3) auquel la cellule de correction considérée est couplée, avec, en série entre ces deux bornes, une première inductance (La) et deux premières électrodes d'un transistor de puissance (T) dont une troisième électrode constitue une entrée de commande de découpage et, en parallèle sur les deux premières électrodes, un condensateur (Ca) suivi de l'enroulement primaire d'un transformateur (Tr) présentant un enroulement secondaire avec isolement galvanique par rapport à son enroulement primaire, et d'autre part une paire de conducteurs de sortie avec, en série entre les conducteurs de cette paire, une seconde inductance (Lb) magnétiquement couplée à la première inductance (La) et des moyens de redressement comportant l'enroulement secondaire du transformateur (Tr) associé à des éléments redresseurs (Da, Db).
